# EUROPÄISCHE PATENTSCHRIFT

(11) **EP 2 989 380 B1**
(45) Veröffentlichungstag und Bekanntmachung des Hinweises auf die Patenterteilung: **31.10.2018**
(21) Anmeldenummer: 14719266.0
(22) Anmeldetag: 16.04.2014
(51) Int. Cl.: F21V 8/00

(54) **LED-LEUCHTE MIT LICHTLEITERPLATTE**
LED LIGHT FITTING HAVING A LIGHT-GUIDING PANEL
LUMINAIRE LED PRÉSENTANT UNE PLAQUE GUIDE DE LUMIÈRE

(30) Priorität: 24.04.2013 DE 202013101770 U
(43) Veröffentlichungstag der Anmeldung: 02.03.2016
(73) Patentinhaber: Zumtobel Lighting GmbH, 6850 Dornbirn (AT)
(72) Erfinder: FEUERLE, Helmut, A-6934 Sulzberg (AT); KILGA, Marcel, A-6840 Götzis (AT); SPIEGEL, Michael, A-6850 Dornbirn (AT)
(74) Vertreter: Thun, Clemens
(86) Internationale Anmeldenummer: PCT/EP2014/057807
(87) Internationale Veröffentlichungsnummer: WO 2014/173777

(56) Entgegenhaltungen:
- EP-A2- 2 192 430
- WO-A1-2012/023322
- WO-A1-2013/035664
- CN-A- 102 537 884
- US-A1- 2012 063 163
- US-A1- 2012 281 151

## Beschreibung

Die Erfindung betrifft eine Leuchte mit einer LED-Lichtquelle (LED: Licht emittierende Diode) und einer Lichtleiterplatte.

Bei einer derartigen Leuchte muss beim Zusammenbau die LED-Lichtquelle relativ zu der Lichtleiterplatte genau positioniert werden, damit bei Betrieb der Leuchte eine einwandfreie Einkopplung des Lichts der LED-Lichtquelle in den Lichtleiter sichergestellt ist. Zur Erzielung einer besonders effektiven Einkopplung bzw. Einstrahlung des Lichts ist dabei eine besonders präzise Positionierung erforderlich. Dies ist in der Praxis mit erheblichem Aufwand verbunden.

Aus der EP 2 192 430 A2 ist eine Hintergrundbeleuchtungseinheit mit einer LED-Lichtquelle und einer Lichtleiterplatte bekannt. Zur Auflage der Lichtleiterplatte dient ein Aufnahmeelement. Die LED-Lichtquelle ist über ein Federelement mit dem Aufnahmeelement verbunden.

Aus der CN 102 537 884 A ist eine Beleuchtungseinheit mit einer LED-Lichtquelle und einer Lichtleiterplatte bekannt. Zur Auflage der Lichtleiterplatte dient eine Rückplatte. Ein LED-Lichtquellen-Trägerelement ist verschiebbar gegenüber der Rückplatte angeordnet.

Der Erfindung liegt die Aufgabe zugrunde, eine entsprechende verbesserte Leuchte anzugeben; insbesondere soll die Leuchte bei hoher Effizienz einen erleichterten Zusammenbau ermöglichen.

Diese Aufgabe wird gemäß der Erfindung mit dem in dem unabhängigen Anspruch genannten Gegenstand gelöst. Besondere Ausführungsformen der Erfindung sind in den abhängigen Ansprüchen angegeben.

Gemäß der Erfindung ist eine Leuchte vorgesehen, die eine LED-Lichtquelle zur Erzeugung eines Lichts aufweist, sowie eine Lichtleiterplatte, wobei die LED-Lichtquelle derart angeordnet ist, dass das Licht in die Lichtleiterplatte eingekoppelt wird. Die LED-Lichtquelle ist dabei derart angeordnet, dass das von der der LED-Lichtquelle erzeugte Licht über eine Einstrahl-Randfläche der Lichtleiterplatte in die Lichtleiterplatte eingestrahlt wird. Außerdem weist die Leuchte ein Auflageelement zur Auflage der Lichtleiterplatte auf, sowie ein LED-Lichtquellen-Trägerelement, wobei das LED-Lichtquellen-Trägerelement verschiebbar relativ zu dem Auflageelement gelagert angeordnet ist.

Durch diese Gestaltung lässt sich vorteilhaft erzielen, dass sich zum Zusammenbau der Leuchte die Lichtleiterplatte zunächst mithilfe des Auflageelements in eine bestimmte Bezugsebene bringen lässt und anschließend durch ein einfaches Verschieben des LED-Lichtquellen-Trägerelements die für einen Betrieb der Leuchte vorgesehene Relativpositionierung zwischen der LED-Lichtquelle und dem Lichtleiter hergestellt wird. Auf diese Weise ist der Zusammenbau der Leuchte erleichtert.

Erfindungsgemäß ist das LED-Lichtquellen-Trägerelement derart verschiebbar relativ zu dem Auflageelement gelagert angeordnet, dass es von einer Montageposition in eine Betriebsposition verschiebbar ist, wobei die Lichtleiterplatte reversibel von der restlichen Leuchte separiert werden kann, wenn sich das LED-Lichtquellen-Trägerelement in der Montageposition befindet. Auf diese Weise lässt sich die Lichtleiterplatte beim Zusammenbau der Leuchte besonders einfach auf dem Auflageelement wie vorgesehen anordnen, wenn sich das LED-Lichtquellen-Trägerelement in der Montageposition befindet.

Erfindungsgemäß ist die Lichtleiterplatte relativ zu der LED-Lichtquelle durch das LED-Lichtquellen-Trägerelement in einer für einen Betrieb der Leuchte vorgesehenen Stellung gehaltert, wenn sich das LED-Lichtquellen-Trägerelement in der Betriebsposition befindet. Auf diese Weise lässt sich erzielen, dass die Lichtleiterplatte besonders geeignet sicher positioniert fixiert ist, wenn sich das LED-Lichtquellen-Trägerelement in der Betriebsposition befindet.

Die Lichtleiterplatte ist relativ zu der LED-Lichtquelle durch das LED-Lichtquellen-Trägerelement in einer für einen Betrieb der Leuchte vorgesehenen Stellung gehaltert, wenn sich das LED-Lichtquellen-Trägerelement in der Betriebsposition befindet.

Vorzugsweise ist die Leuchte derart gestaltet, dass das LED-Lichtquellen-Trägerelement in der Betriebsposition seitlich gegen die Lichtleiterplatte drückt. Auf diese Weise lässt sich sicherstellen, dass die geeignete Relativposition zwischen der Lichtleiterplatte und der LED-Lichtquelle im Verlauf eines Betriebs der Leuchte zuverlässig beibehalten wird, insbesondere auch bei entsprechenden Temperaturschwankungen und den damit verbundenen Größenveränderungen der Bauteile der Leuchte, also beispielsweise, wenn sich die Lichtleiterplatte und das Auflageelement unterschiedlich stark ausdehnen.

Erfindungsgemäß ist das LED-Lichtquellen-Trägerelement in der Betriebsposition mithilfe eines Federelements eingerastet positioniert relativ zu dem Auflageelement angeordnet. Hierdurch lässt sich eine weitergehende sichere Fixierung der Relativposition bei Betrieb der Leuchte erzielen; außerdem ist es hierdurch beim Zusammenbau der Leuchte vorteilhaft haptisch erfassbar, wenn am Ende des Verschiebens das LED-Lichtquellen-Trägerelement die Betriebsposition erreicht hat.

Vorzugsweise ist das LED-Lichtquellen-Trägerelement derart geformt, dass es in der Betriebsposition die Lichtleiterplatte positionierend umgreift. Hierdurch ist eine besonders zuverlässige und sichere Halterung bzw. Lagesicherung der Lichtleiterplatte ermöglicht.

Vorzugsweise weist das LED-Lichtquellen-Trägerelement ein Trägerblech auf. Hierdurch lässt sich besonders geeignet die Verschiebbarkeit des LED-Lichtquellen-Trägerelements relativ zu dem Auflageelement bewirken.

Weiterhin vorzugsweise ist dabei das Trägerblech abgewinkelt geformt. Hierdurch lässt sich besonders geeignet erzielen, dass temperaturschwankungsbedingte Größenänderungen der Lichtleiterplatte durch das LED-Lichtquellen-Trägerelement aufgefangen bzw. ausgeglichen werden.

Weiterhin vorzugsweise besteht das Trägerblech aus Aluminium. Hierdurch lässt sich erzielen, dass das Trägerblech eine besonders geeignete Flexibilität aufweist. Zudem kann hierdurch vorteilhaft Wärme, die bei einem Betrieb der LED-Lichtquelle entsteht, über das LED-Lichtquellen-Trägerelement abgleitet werden.

Vorzugsweise weist das LED-Lichtquellen-Trägerelement einen Lichtaustrittsdiffusor auf, der das Licht der LED-Lichtquelle diffus wirkend beeinflusst. Hierdurch lässt sich erzielen, dass das Licht der LED-Lichtquelle besonders gleichmäßig in die Lichtleiterplatte eingekoppelt wird, insbesondere, wenn die LED-Lichtquelle mehrere LEDs aufweist.

Vorzugsweise ist dabei der Lichtaustrittsdiffusor über eine Rastverbindung mit dem restlichen LED-Lichtquellen-Trägerelement verbunden angeordnet. Hierdurch ist der Zusammenbau des LED-Lichtquellen-Trägerelements erleichtert.

Vorzugsweise liegt der Lichtaustrittsdiffusor an der Lichtleiterplatte an. Hierdurch lässt sich erzielen, dass die LED-Lichtquelle besonders geeignet in einer definierten Position, insbesondere in einem definierten Abstand gegenüber der Lichtleiterplatte angeordnet ist.

Vorzugsweise weist die LED-Lichtquelle mehrere LEDs auf und der Lichtaustrittsdiffusor mehrere Löcher, wobei jede der LEDs genau in eines der Löcher eingreifend angeordnet ist. Hierdurch lässt sich erzielen, dass der Lichtaustrittsdiffusor besonders effektiv und geeignet das Licht der LED-Lichtquelle beeinflusst.

Vorzugsweise ist zwischen der Lichtleiterplatte und dem Auflageelement ein Reflektor angeordnet. Hierdurch lässt sich erzielen, dass besonders viel Licht von der Lichtleiterplatte abgegeben wird und so die Effizienz der Leuchte vergrößert wird.

Die Erfindung wird im Folgenden anhand eines Ausführungsbeispiels und mit Bezug auf die Figuren näher erläutert. Es zeigen:
- Fig. 1: eine perspektivische Skizze nach Art einer Explosionsdarstellung zu einer erfindungsgemäßen Leuchte,
- Figuren 2a bis 2c: drei Skizzen zum Zusammenbau der Leuchte,
- Fig. 3: eine perspektivische Skizze eines Endbereichs des LED-Lichtquellen-Trägerelements,
- Fig. 4: eine perspektivische Detailskizze nach Art einer Schnittdarstellung und
- Figuren 5a und 5b: zwei perspektivische Skizzen des Federelements, mit dem beim Zusammenbau der Leuchte das LED-Lichtquellen-Trägerelement relativ zu dem Auflageelement positioniert wird.

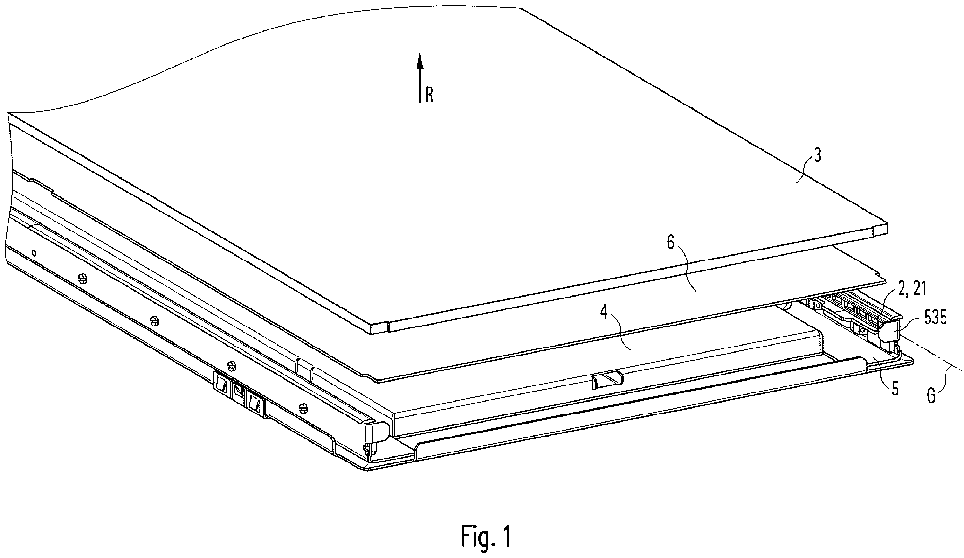

Fig. 1 zeigt eine perspektivische Skizze zu Teilen einer erfindungsgemäßen Leuchte. Die Leuchte weist eine LED-Lichtquelle 2 zur Erzeugung eines Lichts auf, sowie eine Lichtleiterplatte 3. Aufgrund der Plattenform weist die Lichtleiterplatte 3 auf zwei gegenüberliegenden Seiten zwei große Haupt-Oberflächen auf, die über kleine bzw. schmale Randflächen, sozusagen stirnseitige Flächen, miteinander verbunden sind.

Die in Fig. 1 gezeigte Skizze ist eine Darstellung nach Art einer Explosionsdarstellung. Die LED-Lichtquelle 2 ist, wenn die Leuchte wie vorgesehen zusammengebaut ist, derart angeordnet, dass das von der LED-Lichtquelle 2 erzeugte Licht über eine der Randflächen der Lichtleiterplatte 3, im Folgenden auch als "Einstrahl-Randfläche" bezeichnet, in die Lichtleiterplatte 3 eingekoppelt bzw. eingestrahlt wird.

Im Weiteren wird das so in die Lichtleiterplatte 3 eingekoppelte Licht über wenigstens eine der beiden großen Haupt-Oberflächen abgestrahlt. Das Licht wird also "flächig" über die Lichtleiterplatte 3 abgegeben. Bei der in Fig. 1 skizzierten Ausführung erfolgt die Abstrahlung über diejenige Haupt-Oberfläche, die in die mit einem Pfeil angedeutete Richtung *R* weist. In der vorliegenden Beschreibung wird davon ausgegangen, dass die Leuchte so orientiert ist, dass die Lichtleiterplatte 3 horizontal ausgerichtet ist und die Richtung *R* vertikal nach oben weist. Diese Ausrichtung ist jedoch nicht beschränkend und ist lediglich für die vorliegende Beschreibung so gewählt. Beispielsweise kann es sich bei der Leuchte um eine Deckenleuchte handeln, die für eine Lichtabgabe der Lichtleiterplatte nach unten vorgesehen ist.

Weiterhin weist die Leuchte ein Auflageelement 4 auf, das zur Auflage der Lichtleiterplatte 3 dient. Bei dem Auflageelement 4 kann es sich beispielsweise herstellungstechnisch vorteilhaft um ein Blechteil handeln. Das Auflageelement 4 kann insgesamt - wie aus Fig. 1 beispielhaft hervorgeht - im Wesentlichen plattenförmig gestaltet sein, wobei das Auflageelement 4 parallel zu der Lichtleiterplatte 3 ausgerichtet ist.

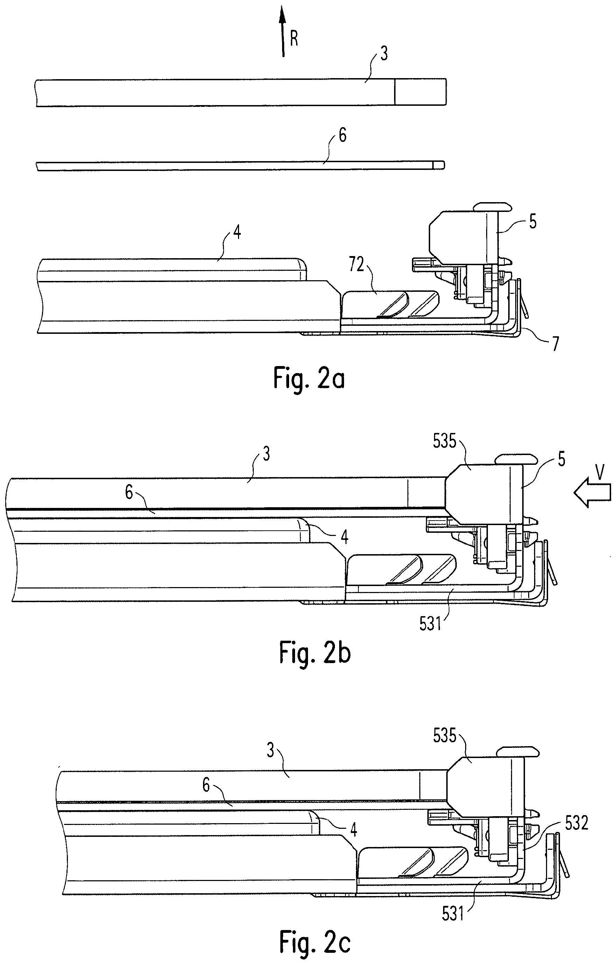

Weiterhin weist die Leuchte ein LED-Lichtquellen-Trägerelement 5 auf. In Fig. 2 ist ein Endbereich des LED-Lichtquellen-Trägerelements 5, verbunden mit der LED-Lichtquelle 2 von der restlichen Leuchte separiert perspektivisch skizziert. Die LED-Lichtquelle 2 kann eine Platine umfassen, auf der mehrere LEDs 21 angeordnet sind, insbesondere längs einer horizontalen Geraden *G* angeordnet.

Das LED-Lichtquellen-Trägerelement 5 ist verschiebbar relativ zu dem Auflageelement 4 gelagert angeordnet. Die Lagerung kann herstellungstechnisch vorteilhaft als Gleitlager gestaltet sein. Im gezeigten Beispiel ist das LED-Lichtquellen-Trägerelement 5 mit dem Auflageelement 4 entsprechend beweglich verbunden. Das Auflageelement 4 dient dabei als Halter für das LED-Lichtquellen-Trägerelement 5.
Insbesondere ist das LED-Lichtquellen-Trägerelement 5 derart verschiebbar relativ zu dem Auflageelement 4 gelagert angeordnet, dass es von einer Montageposition in eine Betriebsposition verschiebbar ist, wobei die Lichtleiterplatte 3 reversibel von der restlichen Leuchte separiert werden kann, wenn sich das LED-Lichtquellen-Trägerelement 5 in der Montageposition befindet.
In den Figuren 2a, 2b und 2c sind drei Querschnittskizzen zu diesen beiden Positionen des LED-Lichtquellen-Trägerelements 5 gezeigt. In den Situationen, die in den Figuren 2a und 2b skizziert sind, befindet sich das LED-Lichtquellen-Trägerelement 5 in der Montageposition. Wenn sich das LED-Lichtquellen-Trägerelement 5 in dieser Montageposition befindet, lässt sich die Lichtleiterplatte 3 in Richtung *R* bzw. nach oben hindernisfrei abnehmen bzw. andersherum hindernisfrei von oben kommend entgegen der Richtung *R,* also nach unten bzw. auf das Auflageelement 4 zu bewegen, bis es sich in der für den Betrieb vorgesehenen Position gegenüber dem Auflageelement 4 befindet. Zum Zusammenbau der Leuchte kann also vorteilhaft das LED-Lichtquellen-Trägerelement 5 in der Montageposition angeordnet werden und anschließend die Lichtleiterplatte 3 von oben nach unten entgegen der Richtung *R* bewegt werden.
In der in Fig. 2c skizzierten Situation befindet sich das LED-Lichtquellen-Trägerelement 5 in der Betriebsposition. In dieser Situation ist die Lichtleiterplatte 3 relativ zu der LED-Lichtquelle 2 durch das LED-Lichtquellen-Trägerelement 5 in einer für einen Betrieb der Leuchte vorgesehenen Stellung gehaltert bzw. fixiert.

Erfindungsgemäß ist das LED-Lichtquellen-Trägerelement 5 derart verschiebbar gelagert angeordnet, dass sich durch das Verschieben von der Montageposition in die Betriebsposition die LED-Lichtquelle 2 bzw. die Reihe der LEDs 21 auf die Einstrahl-Randfläche der Lichtleiterplatte 3 zu bewegt.

Im gezeigten Beispiel ist die Lagerung dementsprechend so, dass sich bei dem Verschieben die LED-Lichtquelle 2 horizontal und dabei rechtwinklig zu der Geraden G bewegt. In Fig. 2b ist diese Verschieberichtung *V* mit einem dicken Pfeil angedeutet.

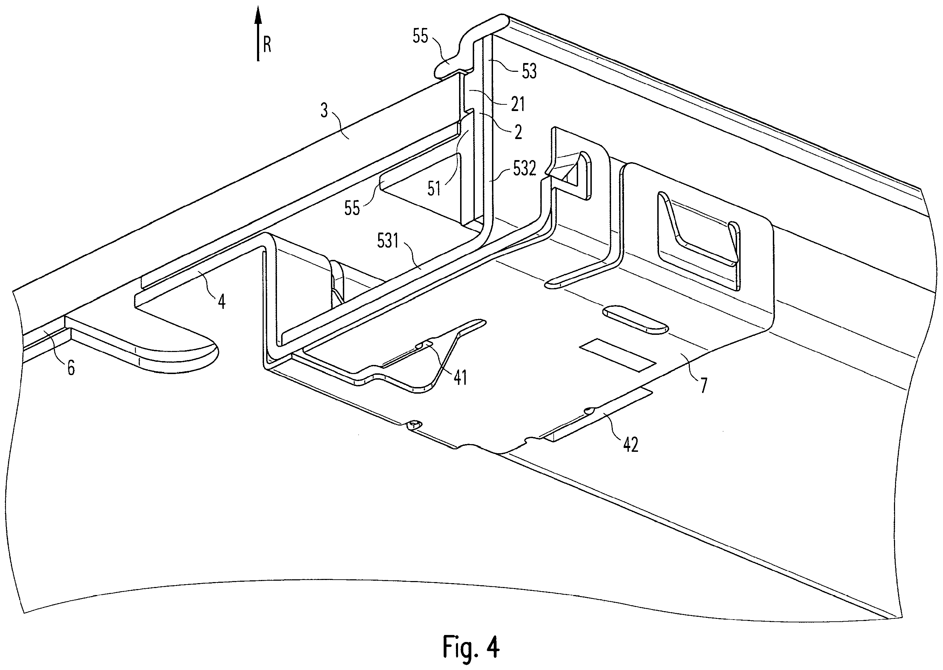

In Fig. 4 ist eine perspektivische Schnittdarstellung gezeigt, die eine Situation wiedergibt, in der sich das LED-Lichtquellen-Trägerelement 5 in der Betriebsposition befindet. Die LEDs 21 befinden sich in dieser Situation vorzugsweise sehr nahe an der Lichtleiterplatte 3 bzw. deren Einstrahl-Randfläche, so dass eine besonders effiziente Einkopplung des Lichts ermöglicht ist.

Vorzugsweise ist das LED-Lichtquellen-Trägerelement 5 derart geformt, dass es in der Betriebsposition die Lichtleiterplatte 3 positionierend umgreift. Beispielsweise kann das LED-Lichtquellen-Trägerelement 5 hierfür Vorsprünge bzw. Arme 55 aufweisen, die zur Lagefixierung der Lichtleiterplatte 3 dienen und insbesondere die Lichtleiterplatte 3 von oben und unten umgreifen. Hierdurch ist eine besonders zuverlässige und sichere Positionierung der Lichtleiterplatte 3 ermöglicht.

Vorzugsweise ist die Leuchte so gestaltet, dass das LED-Lichtquellen-Trägerelement 5 in der Betriebsposition seitlich gegen die Lichtleiterplatte 3 drückt. Hierdurch ist nicht nur eine besonders zuverlässige Halterung ermöglicht, sondern es lässt sich auch erzielen, dass temperaturschwankungsbedingte Größenänderungen der beteiligten Teile, also insbesondere der Lichtleiterplatte 3 und des Auflageelements 4 aufgefangen bzw. ausgeglichen werden können.

Wie beim gezeigten Ausführungsbeispiel der Fall, weist das LED-Lichtquellen-Trägerelement 5 vorzugsweise ein Trägerblech 53 auf. Eine mechanisch besonders vorteilhafte Ausführung ist dabei ermöglicht, wenn das Trägerblech 53 abgewinkelt ausgeführt ist, insbesondere abgewinkelt um eine Kante, die sich parallel zu der Gerade *G* erstreckt. Auf diese Weise sind ein horizontaler Schenkel 531 des Trägerblechs 53 und ein vertikaler Schenkel 532 des Trägerblechs 53 gebildet. Hierdurch ist besonders vorteilhaft ein federndes Andrücken der LED-Lichtquelle 2 gegen die Lichtleiterplatte 3 ermöglicht.

Besonders vorteilhaft besteht das Trägerblech 53 aus Aluminium. Dies ist nicht nur mit Bezug auf das erwähnte Andrücken vorteilhaft, sondern ermöglicht außerdem eine besonders geeignete Abfuhr von Wärme, die bei Betrieb der LED-Lichtquelle 2 entstehen kann.

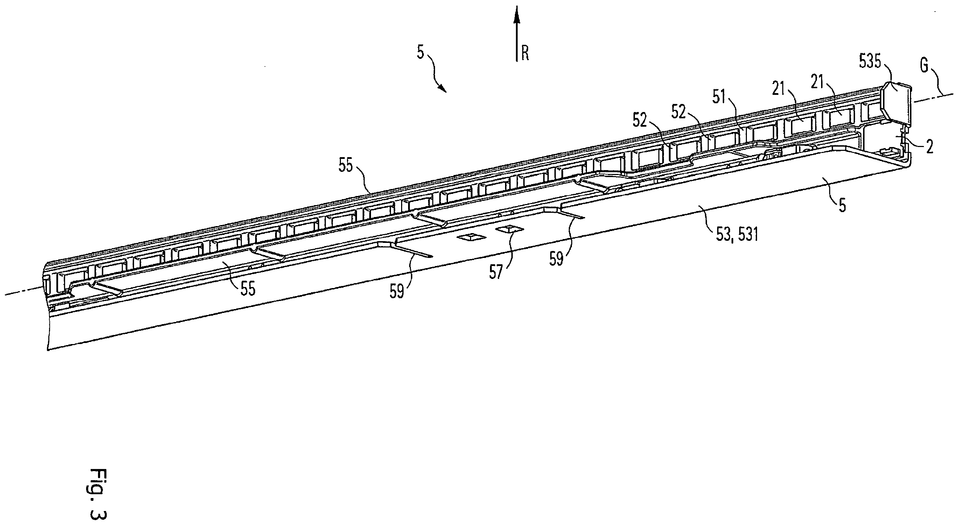

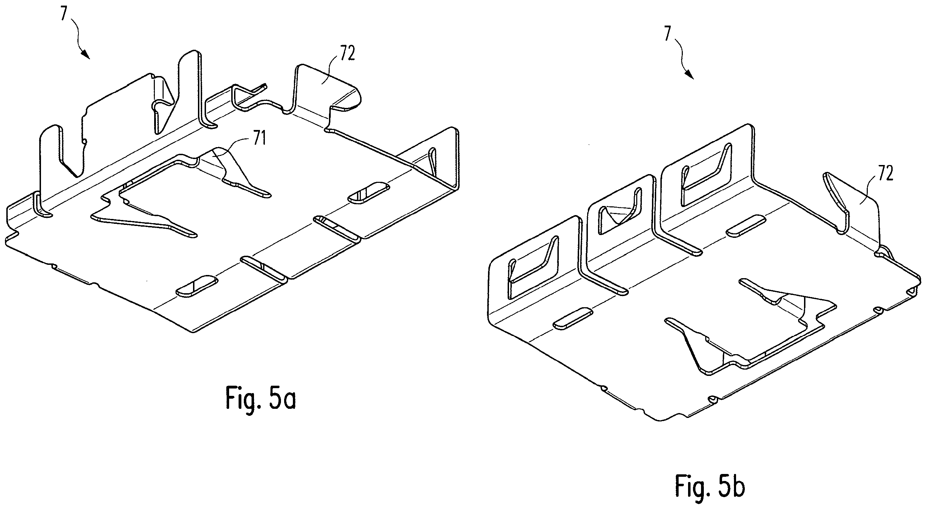

Vorzugsweise ist das LED-Lichtquellen-Trägerelement 5 in der Betriebsposition mithilfe eines Federelements 7 eingerastet positioniert relativ zu dem Auflageelement 4 angeordnet. In den Figuren 5a und 5b sind zwei perspektivische Ansichten aus unterschiedlichen Richtungen des separierten Federelements 7 gezeigt. Beim Ausführungsbeispiel wird zum Zusammenbau das Federelement 7 von unten auf das Auflageelement 4 aufgesteckt, wobei es mit einem Federfortsatz 71 ein - in Fig. 4 bezeichnetes - Durchführungsloch 41 in dem Auflageelement 4 durchgreift und in eine - in Fig. 3 bezeichnete - Ausnehmung 57 des LED-Lichtquellen-Trägerelements 5 eingreift, wenn sich das LED-Lichtquellen-Trägerelement 5 in der Betriebsposition befindet. Vorzugsweise ist die Ausnehmung 57 an dem horizontalen Schenkel 531 des Trägerblechs 53 ausgebildet.

Vorzugsweise weist das Federelement 7 weiterhin Führungsarme 72 auf, die zur Führung bei der Verschiebebewegung des LED-Lichtquellen-Trägerelements 5 von der Montageposition in die Betriebsposition dienen. Wie aus Fig. 4 beispielhaft hervorgeht, weist das Auflageelement 4 hierzu vorzugsweise entsprechende weitere Durchführungslöcher 42 auf. Das Trägerelement 53 kann hierbei - wie in Fig. 3 gezeigt - Schlitze 59 aufweisen, in welche die Führungsarme 72 des Federelements 7 entsprechend eingreifen. Vorzugsweise sind auch diese Schlitze 59 an dem horizontalen Schenkel 531 des Trägerblechs 53 ausgebildet.

Vorzugsweise weist das Trägerblech 53 weiterhin - mit Bezug auf die Gerade G - an den beiden Endbereichen Anschläge 535 auf, die zur weitergehenden Lagesicherung der Lichtleiterplatte 3 dienen. Die Anschläge 535 können beispielsweise durch abgekantete Bereiche des vertikalen Schenkels 532 des Trägerblechs 53 gebildet sein.

Wie weiterhin beim Ausführungsbeispiel der Fall, weist das LED-Lichtquellen-Trägerelement 5 vorzugsweise einen, in den Figuren 3 und 4 bezeichneten, Lichtaustrittsdiffusor 51 auf, der so gestaltet ist, dass er das Licht der LED-Lichtquelle 2 diffus wirkend beeinflusst. Hierdurch wird erzielt, dass das Licht der LEDs 21 weniger punktförmig, sondern mehr gleichmäßig in die Einstrahl-Randfläche der Lichtleiterplatte 3 eingestrahlt bzw. eingekoppelt wird. Im Weiteren lässt sich hierdurch eine besonders homogene Lichtabgabe erzielen.

Vorzugsweise ist der Lichtaustrittsdiffusor 51 über eine Rastverbindung mit dem restlichen LED-Lichtquellen-Trägerelement 5, insbesondere mit dem Trägerblech 53 verbunden angeordnet. Hierdurch ist ein besonders einfacher Zusammenbau des LED-Lichtquellen-Trägerelements 5 ermöglicht. Besonders bevorzugt ist die LED-Lichtquelle 2 durch den Lichtaustrittsdiffusor 51 an dem restlichen LED-Lichtquellen-Trägerelement 5, insbesondere an dem Trägerblech 53 gehaltert angeordnet.

Wie beim Ausführungsbeispiel gezeigt, weist der Lichtaustrittsdiffusor 51 vorzugsweise mehrere Löcher 52 auf, wobei jede der LEDs 21 genau in eines der Löcher 52 eingreifend angeordnet ist. Durch diese Gestaltung ist einerseits ein besonders guter Schutz der LEDs 21 und andererseits eine besonders präzise relative Positionierung der LEDs 21 gegenüber der Lichtleiterplatte 3 ermöglicht.

Wie beim Ausführungsbeispiel der Fall und beispielsweise aus Fig. 4 zu entnehmen, ist die LED-Lichtquelle 2 vorzugsweise zwischen dem Trägerblech 52 einerseits und dem Lichtaustrittsdiffusor 53 andererseits gehaltert. Dabei sind die LEDs 21 auf einer Seite der Platine der LED-Lichtquelle 2 angeordnet und der Lichtaustrittsdiffusor 51 liegt an dieser Platine an, und zwar auf derjenigen Seite, auf der sich die LEDs 21 befinden. Dabei umgreift der Lichtaustrittsdiffusor 51 wie oben bereits erwähnt mit seinen Löchern 52 die LEDs 21. Beispielsweise kann der Lichtaustrittsdiffusor 51 Zapfen aufweisen, die Öffnungen in der Platine durchgreifen und auf der gegenüberliegenden Seite mit dem Trägerelement 53 die oben erwähnte Rastverbindung bilden.

Durch den Lichtaustrittsdiffusor 51 lässt sich insbesondere erzielen, dass die LEDs 21 während des Zusammenbaus der Leuchte besonders gut geschützt sind.

Beispielsweise besteht der Lichtaustrittsdiffusor 51 aus Polycarbonat (PC).

Vorzugsweise ist die Leuchte so gestaltet, dass der Lichtaustrittsdiffusor 51 an der Lichtleiterplatte 3 bzw. an deren Einstrahl-Randfläche anliegt, wenn sich das LED-Lichtquellen-Trägerelement 5 in der Betriebsposition befindet. Hierdurch lässt sich erzielen, dass eine geeignete Relativposition, insbesondere ein bestimmter Abstand zwischen der Lichtleiterplatte 3 und der LED-Lichtquelle 2 besonders zuverlässig während des Betriebs der Leuchte eingehalten wird.

Wie beim Ausführungsbeispiel der Fall, kann vorgesehen sein, dass die Leuchte weiterhin einen Reflektor 6 aufweist; hierdurch lässt sich die Effizienz der Abstrahlung der Leuchte steigern. Der Reflektor 6 ist vorzugsweise plattenförmig und parallel zu der Lichtleiterplatte 3 angeordnet, und zwar zwischen der Lichtleiterplatte 3 und dem Auflageelement 4. Beim gezeigten Beispiel umgreift das LED-Lichtquellen-Trägerelement 5 mit den Armen 55 seitlich sowohl die Lichtleiterplatte 3, als auch den Reflektor 6. Außerdem sind die Anschläge 535 des Trägerelements 53 so gestaltet, dass sie auch entsprechend lagesichemd auf den Reflektor 6 wirken.

Zum Zusammenbau der Leuchte kann Folgendes vorgesehen sein: Zunächst wird die LED-Lichtquelle 2 mit dem Lichtaustrittsdiffusor 51 an dem Trägerblech 53 montiert. Hierdurch ist eine "LED-Einheit" gebildet. In einem weiteren Schritt wird die LED-Einheit mittels des Federelements 7 mit dem Auflageelement 4 verbunden, und zwar so, dass sich das LED-Lichtquellen-Trägerelement 5, also der Lichtaustrittsdiffusor 51 und das Trägerblech 53 in der Montageposition befinden. In einem weiteren Schritt wird die Lichtleiterplatte 3, gegebenenfalls zusammen mit dem Reflektor 6, auf das Auflageelement 4 aufgelegt. Dann wird die LED-Einheit bzw. das LED-Lichtquellen-Trägerelement 5 in die Betriebsposition verschoben, also so weit verschoben, bis der Federfortsatz 71 des Federelements 7 in die Ausnehmung 57 des LED-Lichtquellen-Trägerelements 5 eingreift. Dadurch ist die Leiterplatte 3 gegenüber der LED-Lichtquelle 2 in der, für den Betrieb der Leuchte vorgesehenen Relativposition fixiert gehalten.

In der Betriebsposition wird über das Trägerblech 53 durch Vorspannung ein leichter Anpressdruck auf die Lichtleiterplatte 3 ausgeübt, wodurch das Licht der LED-Lichtquelle 2 besonders gut in die Lichtleiterplatte 3 eingekoppelt wird.

Durch den Lichtaustrittsdiffusor 51 wird die LED-Lichtquelle 5 beim Zusammenbau geschützt und bei Betrieb werden die "LED-Punkte" durch den Lichtaustrittsdiffusor 51 aufgelöst.

Durch die erfindungsgemäße Anordnung lässt sich erzielen, dass die Lichtleiterplatte 3 und gegebenenfalls der Reflektor 6 einfach befestigt werden können und die LED-Lichtquelle 2 besonders geeignet und zuverlässig relativ zu der Lichtleiterplatte 3 positioniert werden kann.

In Fig. 1 ist eine Ausführung gezeigt, bei der die Leuchte außerdem eine weitere LED-Einheit aufweist, die analog zu der zuerst genannten LED-Einheit gestaltet ist, wobei die Gestaltung derart ist, dass die weitere LED-Einheit ihr Licht über eine weitere Einstrahl-Randfläche der Lichtleiterplatte 3 in Letztere einstrahlt, die der zuerst genannten Einstrahl-Randfläche gegenüberliegt. Hierdurch lässt sich eine besonders homogene Einkopplung von Licht in die Lichtleiterplatte 3 erzielen.

## Patentansprüche

1. Leuchte, aufweisend
- eine LED-Lichtquelle (2) zur Erzeugung eines Lichts,
- eine Lichtleiterplatte (3), wobei die LED-Lichtquelle (2) derart angeordnet ist, dass das Licht in die Lichtleiterplatte (3) eingekoppelt wird,
wobei die LED-Lichtquelle (2) derart angeordnet ist, dass das von der LED-Lichtquelle (2) erzeugte Licht über eine Einstrahl-Randfläche der Lichtleiterplatte (3) in die Lichtleiterplatte (3) eingestrahlt wird,
- ein Auflageelement (4) zur Auflage der Lichtleiterplatte (3) und
- ein LED-Lichtquellen-Trägerelement (5), wobei das LED-Lichtquellen-Trägerelement (5) verschiebbar relativ zu dem Auflageelement (4) gelagert angeordnet ist,
wobei das LED-Lichtquellen-Trägerelement (5) derart verschiebbar relativ zu dem Auflageelement (4) gelagert angeordnet ist, dass es von einer Montageposition in eine Betriebsposition verschiebbar ist, wobei die Lichtleiterplatte (3) reversibel von der restlichen Leuchte separiert werden kann, wenn sich das LED-Lichtquellen-Trägerelement (5) in der Montageposition befindet,
wobei die Lichtleiterplatte (3) relativ zu der LED-Lichtquelle (2) durch das LED-Lichtquellen-Trägerelement (5) in einer für einen Betrieb der Leuchte vorgesehenen Stellung gehaltert ist, wenn sich das LED-Lichtquellen-Trägerelement (5) in der Betriebsposition befindet,
**dadurch gekennzeichnet,**
**dass** das LED-Lichtquellen-Trägerelement (5) derart verschiebbar gelagert angeordnet ist, dass sich durch das Verschieben von der Montageposition in die Betriebsposition die LED-Lichtquelle (2) auf die Einstrahl-Randfläche der Lichtleiterplatte (3) zu bewegt,
wobei das LED-Lichtquellen-Trägerelement (5) in der Betriebsposition mithilfe eines Federelements (7) eingerastet positioniert relativ zu dem Auflageelement (4) angeordnet ist.

2. Leuchte nach Anspruch 1,
die derart gestaltet ist, dass das LED-Lichtquellen-Trägerelement (5) in der Betriebsposition seitlich gegen die Lichtleiterplatte (3) drückt.

3. Leuchte nach einem der vorhergehenden Ansprüche,
bei der das LED-Lichtquellen-Trägerelement (5) derart geformt ist, dass es in der Betriebsposition die Lichtleiterplatte (3) positionierend umgreift.

4. Leuchte nach einem der vorhergehenden Ansprüche,
bei der das LED-Lichtquellen-Trägerelement (5) ein Trägerblech (53) aufweist,

5. Leuchte nach Anspruch 4,
bei der das Trägerblech (53) abgewinkelt geformt ist.

6. Leuchte nach Anspruch 4 oder 5,
bei der das Trägerblech (53) aus Aluminium besteht.

7. Leuchte nach einem der vorhergehenden Ansprüche,
bei der das LED-Lichtquellen-Trägerelement (5) einen Lichtaustrittsdiffusor (51) aufweist, der das Licht der LED-Lichtquelle (2) diffus wirkend beeinflusst.

8. Leuchte nach Anspruch 7,
bei der der Lichtaustrittsdiffusor (51) über eine Rastverbindung mit dem restlichen LED-Lichtquellen-Trägerelement (5) verbunden angeordnet ist.

9. Leuchte nach Anspruch 7 oder 8,
bei der der Lichtaustrittsdiffusor (51) an der Lichtleiterplatte (2) anliegt.

10. Leuchte nach einem Ansprüche 7 bis 9,
bei der die LED-Lichtquelle (2) mehrere LEDs (21) aufweist und der Lichtaustrittsdiffusor (51) mehrere Löcher (52), wobei jede der LEDs (21) genau in eines der Löcher (52) eingreifend angeordnet ist.

11. Leuchte nach einem der vorhergehenden Ansprüche,
bei der zwischen der Lichtleiterplatte (2) und dem Auflageelement (4) ein Reflektor (6) angeordnet ist.

## Claims

1. Lamp, comprising
- an LED light source (2) for generating light,
- a light-guiding panel (3), wherein the LED light source (2) is arranged in such a way that the light is coupled into the light-guiding panel (3), wherein the LED light source (2) is arranged in such a way that the light generated by the LED light source (2) is radiated into the light-guiding panel (3) via an irradiation edge surface of the light-guiding plate (3),
- a bearing element (4) for bearing the light-guiding panel (3) and
- an LED light source carrier element (5), wherein the LED light source carrier element (5) is mounted so as to be displaceable relative to the bearing element (4),
wherein the LED light source carrier element (5) is mounted so as to be displaceable relative to the bearing element (4) in such a way that it can be displaced from an installation position into an operating position, wherein the light-guiding panel (3) can be reversibly separated from the rest of the lamp when the LED light source carrier element (5) is in the installation position,
wherein, when the LED light source carrier element (5) is in the operating position, the light-guiding panel (3) is held relative to the LED light source (2) by the LED light source carrier element (5) in a position intended for operation of the lamp,
**characterized in that**
the LED light source carrier element (5) is displaceably mounted in such a way that the displacement from the installation position to the operating position causes the LED light source (2) to move toward the irradiation edge surface of the light-guiding panel (3),
wherein, in the operating position, the LED light source carrier element (5) is snapped into place relative to the bearing element (4) with the aid of a spring element (7).

2. Lamp according to Claim 1,
which is configured in such a way that, in the operating position, the LED light source carrier element (5) presses laterally against the light-guiding panel (3).

3. Lamp according to any one of the preceding Claims,
in which the LED light source carrier element (5) is formed in such a way that, in the operating position, it engages around the light-guiding panel (3) so as to position said light-guiding panel.

4. Lamp according to any one of the preceding Claims,
in which the LED light source carrier element (5) comprises a metal carrier plate (53).

5. Lamp according to Claim 4,
in which the metal carrier plate (53) has an angled form.

6. Lamp according to Claim 4 or 5,
in which the metal carrier plate (53) consists of aluminum.

7. Lamp according to any one of the preceding Claims,
in which the LED light source carrier element (5) comprises a light-emitting diffuser (51), which has a diffusing effect on the light from the LED light source (2).

8. Lamp according to Claim 7,
in which the light-emitting diffuser (51) is connected to the rest of the LED light source carrier element (5) via a snap-in connection.

9. Lamp according to Claim 7 or 8,
in which the light-emitting diffuser (51) abuts the light-guiding panel (2).

10. Lamp according to any one of Claims 7 to 9,
in which the LED light source (2) comprises a plurality of LEDs (21) and the light-emitting diffuser (51) comprises a plurality of holes (52), wherein each of the LEDs (21) engages precisely in one of the holes (52).

11. Lamp according to any one of the preceding Claims,
in which a reflector (6) is disposed between the light-guiding panel (2) and the bearing element (4).

## Revendications

1. Luminaire, présentant
- une source lumineuse à DEL (2) pour la production d'une lumière,
- une plaque guide de lumière (3), la source lumineuse à DEL (2) étant disposée de façon telle que la lumière est injectée dans la plaque guide de lumière (3),
dans lequel la source lumineuse à DEL (2) est disposée de façon telle que la lumière produite par la source lumineuse à DEL (2) est projetée par le biais d'une surface de bord de rayonnement de la plaque guide de lumière (3) dans la plaque guide de lumière (3),
- un élément support (4) pour le support de la plaque guide de lumière (3) et
- un élément support de source lumineuse à DEL (5), l'élément support de source lumineuse à DEL (5) étant disposé, logé de manière à pouvoir se déplacer par rapport à l'élément support (4),
dans lequel l'élément support de source lumineuse à DEL (5) est disposé, logé de manière à pouvoir se déplacer par rapport à l'élément de support (4) de sorte qu'il puisse se déplacer d'une position de montage vers une position d'utilisation, la plaque guide de lumière (3) pouvant être séparée du reste du luminaire de façon réversible lorsque l'élément support de source lumineuse à DEL (5) se trouve dans la position de montage,
dans lequel la plaque guide de lumière (3) est maintenue dans une position prévue pour une utilisation du luminaire par rapport à la source lumineuse à DEL (2) par le biais de l'élément support de source lumineuse à DEL (5), lorsque l'élément support de source lumineuse à DEL (5) se trouve dans la position d'utilisation,
**caractérisé en ce**
**que** l'élément support de source lumineuse à DEL (5) est disposé, logé de manière à pouvoir se déplacer, de sorte que, par le déplacement de la position de montage à la position d'utilisation, la source lumineuse à DEL (2) se déplace sur la surface de bord de rayonnement de la plaque guide de lumière (3), l'élément support de source lumineuse à DEL (5) étant disposé dans la position d'utilisation, positionné de manière encliquetée par rapport à l'élément support (4) à l'aide d'un élément ressort (7).

2. Luminaire selon la revendication 1,
conçu de sorte que l'élément support de source lumineuse à DEL (5) est pressé contre la plaque guide de lumière (3), latéralement dans la position d'utilisation.

3. Luminaire selon une des revendications précédentes,
dans lequel l'élément support de source lumineuse à DEL (5) est formé de manière à enserrer la plaque guide de lumière (3) de façon à la positionner dans la position d'utilisation.

4. Luminaire selon une des revendications précédentes,
dans lequel l'élément support de source lumineuse à DEL (5) présente une tôle support (53).

5. Luminaire selon la revendication 4,
dans lequel la tôle support (53) est de forme angulaire.

6. Luminaire selon la revendication 4 ou 5,
dans lequel la tôle support (53) est constituée d'aluminium.

7. Luminaire selon une des revendications précédentes,
dans lequel l'élément support de source lumineuse à DEL (5) présente un diffuseur de sortie de lumière (51), qui influence directement par un impact diffus la lumière de la source lumineuse à DEL (2).

8. Luminaire selon la revendication 7,
dans lequel le diffuseur de sortie de lumière (51) est disposé, relié à l'élément support de source lumineuse à DEL (5) restant, par le biais d'un raccord à encliquetage.

9. Luminaire selon la revendication 7 ou 8,
dans lequel le diffuseur de sortie de lumière (51) est plaqué sur la plaque guide de lumière (2).

10. Luminaire selon une des revendications 7 à 9,
dans lequel la source lumineuse à DEL (2) présente plusieurs DEL (21) et le diffuseur de sortie de lumière (51) présente plusieurs trous (52), chacune des DEL (21) étant disposée exactement dans un des trous (52) par insertion.

11. Luminaire selon une des revendications précédentes,
dans lequel un réflecteur (6) est disposé entre la plaque guide de lumière (2) et l'élément support (4).
